Europäisches Patentamt

European Patent Office

Office européen des brevets

(11) Publication number: **0 400 993**
**A2**

## EUROPEAN PATENT APPLICATION

(21) Application number: **90305885.7**

(22) Date of filing: **30.05.90**

(51) Int. Cl.⁵: **G09G 3/36, H04N 9/31**

A request for correction on page 16 of the description has been filed pursuant to Rule 88 EPC. A decision on the request will be taken during the proceedings before the Examining Division (Guidelines for Examination in the EPO, A-V, 2.2).

(30) Priority: **02.06.89 JP 141672/89**
**30.03.90 JP 86534/90**

(43) Date of publication of application:
**05.12.90 Bulletin 90/49**

(84) Designated Contracting States:
**DE FR GB**

(71) Applicant: **MATSUSHITA ELECTRIC WORKS, LTD.**
**1048, Oaza-kadoma**
**Kadoma-shi Osaka 571(JP)**

(72) Inventor: **Kotaka, Mitsuru**
**193-7, Nojiri-cho, Sakai-shi**
**Osaka-fu 591(JP)**
Inventor: **Muraji, Tsutomu**
**3-1815-43, Shoyodai, Nimyo-cho**
**Nara-shi, Naraken 631(JP)**

(74) Representative: **Crawford, Andrew Birkby et al**
**A.A. THORNTON & CO. Northumberland**
**House 303-306 High Holborn**
**London WC1V 7LE(GB)**

(54) **Projection-type image display apparatus.**

(57) In a projection-type image display apparatus for projecting images produced on a plurality of liquid crystal panels onto a screen, the effect of a flicker caused by a difference in the luminance during a particular period is attenuated by applying to one of the liquid crystal panels a signal voltage of which phase is different by a predetermined degree from other signal voltages applied to the remaining two liquid crystal panels.

FIG. 1

EP 0 400 993 A2

## Projection-type image display apparatus

The present invention relates to a projection-type image display apparatus for projecting an enlargement of an image produced by an image display device such as a liquid crystal panel.

Visual display devices have been improved for providing large screen size, high definition, and high luminance, as with the increase of high quality image sources such as advanced VTR's, satellite TV stations, and the like.

Particularly, liquid crystal displays are now widely admitted as devices for contributing to the small size, light weight, and low energy consumption and commercially used in pocket-type televisions or projection televisions.

A typical liquid crystal image display device comprises an active matrix base plate in which each pixel is incorporated with both a display element and a switching element, a counter electrode acting as a common electrode, and a liquid crystal layer interposed between the active matrix base plate and the counter electrode. For alternate-current drive operation, video signal voltages applied to the liquid crystal layer are inverted in the polarity in alternate periods, e.g. fields, with respect to a given voltage (a common voltage) applied to the counter electrode, whereby the device will last long.

However, the switching element when is formed of a thin-film transistor (TFT) hardly permits the AC drive to serve as an ideal static drive, in which a minimal degree of non-symmetry between the video signal voltage and the common at odd and even fields will cause a difference in the luminance of a displayed image during a specified period or more specifically, a flicker.

The flicker is caused by:

(1) non-symmetry in the shift of pixel potential level caused by the anisotropic effect associated with a gate-source capacity of TFT and a dielectric constant of the liquid crystal,

(2) non-symmetry in the write-in pixel potential caused by a deficiency of TFT-on current,

(3) non-symmetry caused by different TFT-off currents depending on their polarities,

(4) non-symmetry caused by an offset action in the liquid crystal cell, and

(5) non-symmetry in the applied voltage associated with the total of TFT and liquid crystal.

Flicker becomes one of the causes for deteriorating the quality of an image on the liquid crystal display apparatus.

There have been proposed some methods of reducing the effect of flicker.

For example, in a liquid crystal color television having R(red), G(green), and B(blue) pixels coated with microfilters of red, green, and blue colors and arranged in a particular order, the application of signal voltages is carried out in which one of the three primary color video signal voltages is different by $\pi$ (180°) in the phase of polarity inversion with respect to a common voltage from the other two video signal voltages, so that the effect of flicker can be offset and attenuated in 2/3 of the display area of each liquid crystal display panel (Japanese Patent Laid-open Publication 62-242920 (1987)).

According to the above method, resultant flickers e.g. of 30 Hz are inverted in the phase at alternate adjacent pixels or minimal picture regions and thus, offset each other between the two adjacent pixels or minimal picture regions, whereby the development of visual flicker will be avoided.

However, in the prior art projection-type liquid crystal display apparatus:

(1) the temperature of each liquid crystal panel rises up to 50 to 60°C and the viscosity of liquid crystal becomes decreased, causing a response speed to increase and a flicker to appear distinct;

(2) the incident of light on each liquid crystal panel is as great as 80,000 to 100,000 luxes, causing a flicker to appear more distinct throughout an image; and

(3) the size of a projection screen is- larger than 100 inches, causing a tiny flicker on the liquid crystal panel to be enlarged and appear distinct on the projection screen.

It is thus understood that the foregoing method is inappropriate for elimination of entire flicker. It will be desired to eliminate a flicker in each pixel of a display panel.

It is a primary object of the present invention to provide a projection-type image display apparatus employing liquid crystal light valves for producing a less flickering image.

The principle of the present invention resides in a projection-type image display apparatus having a plurality of active matrix liquid crystal panels for producing respective images according to video signal voltages of given colors which are in turn projected onto a screen by means of back lights of corresponding colors, in which one of three video signal voltages associated with the three primary colors is different by $\pi$ in the phase of polarity inversion with respect to a common voltage from the other two video signal voltages.

Preferably, when the green color video signal voltage is different from the red and blue color video signal voltages by $\pi$ in the phase of polarity inversion with respect to the common voltage, the optimum effect will be attained.

Fig.1 is a schematic view of a projection-type image display apparatus showing a first embodiment of the present invention;

Fig.2 is a block diagram of an image display circuit in the projection-type image display apparatus according to the first embodiment of the present invention;

Fig.3 is a schematic view of an R(red) image display liquid crystal panel 5a according to the first embodiment of the present invention;

Figs.4a, 4b, and 4c are timing charts of R1, $\overline{R1}$, and R2 color signals respectively;

Figs.5a and 5b are timing charts of a VD sync signal from a sync signal separator means 26 and an output signal from a flip-flop 27 respectively;

Figs.6a, 6b, and 6c are diagrams showing the relation of the common voltage, in each field, to an R2 color video signal voltage applied to R(i,j) pixel of the R(red) image display liquid crystal panel 5a, a G2 color video signal voltage applied to G(i,j) pixel, and a $B_2$ color video signal voltage applied to B(i,j) pixel respectively;

Fig.7 is a schematic view of a projection-type image display apparatus showing a second embodiment of the present invention;

Fig.8 is a block diagram of an image display circuit in the projection-type image display apparatus according to the second embodiment of the present invention;

Fig.9 is a schematic view of an R(red) image display liquid crystal panel 72a according to the second embodiment of the present invention;

Fig.10 is a diagram showing the relation between the common voltage and video signal voltage, in each field, at R(i,j) and R(i,j + 1) pixels respectively;

Fig.11 is a view explaining the operation of a typically twisted nematic liquid crystal panel; and

Figs.12a and 12b are diagrams showing a normal drive operation and a common voltage inversion drive operation respectively.

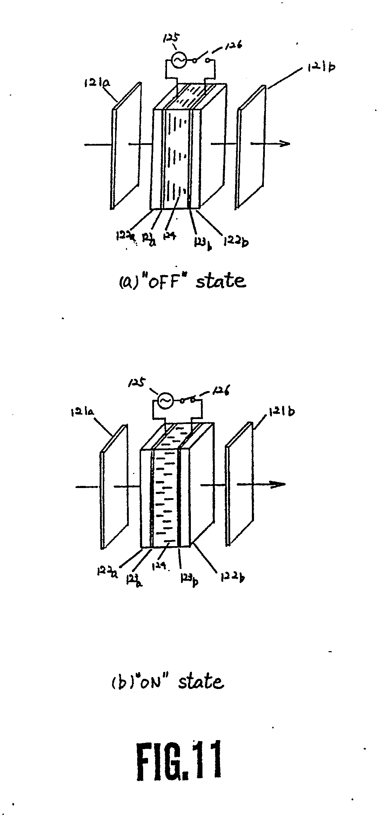

Fig.11 illustrates the operation of a typically twisted nematic liquid crystal panel.

As shown in Fig.11, there are provided polarizing plates 121a and 121b, glass plates 122a and 122b, transparent electrodes 123a and 123b, a liquid crystal layer 124, a power source 125, and a switch 126. The crystal layer 124 is interposed between the transparent electrodes 123a and 123b and the glass plates 122a and 122b. A voltage from the power source 125 is applied by the switch 126 to between the transparent electrodes 123a and 123b for on and off operation.

As best shown in Fig.11-a, when the power source 125 is disconnected by turning off the switch 126 from the transparent electrodes 123a and 123b for "off" operation, incident light is polarized 90° by the action of molecule of the liquid crystal 124. When the transparent electrodes 123a and 123b are energized for "on" operation as shown in Fig.11-b, the incident light passes through without being polarized by the liquid crystal layer 124.

More particularly, when the two polarizing directions of the polarizing plates 121a and 121b are arranged at a right angle to each other, the incident light can pass during "off" operation and be interrupted during "off" operation. When the two polarizing directions of the same are in parallel, the incident light can be interrupted during "off" operation and pass during "on" operation.

During the above procedure, an optical image is produced on the nematic liquid crystal panel according to an video signal voltage.

A first embodiment of the present invention will then be described in the form of a projection-type image display apparatus referring to the accompanying drawings.

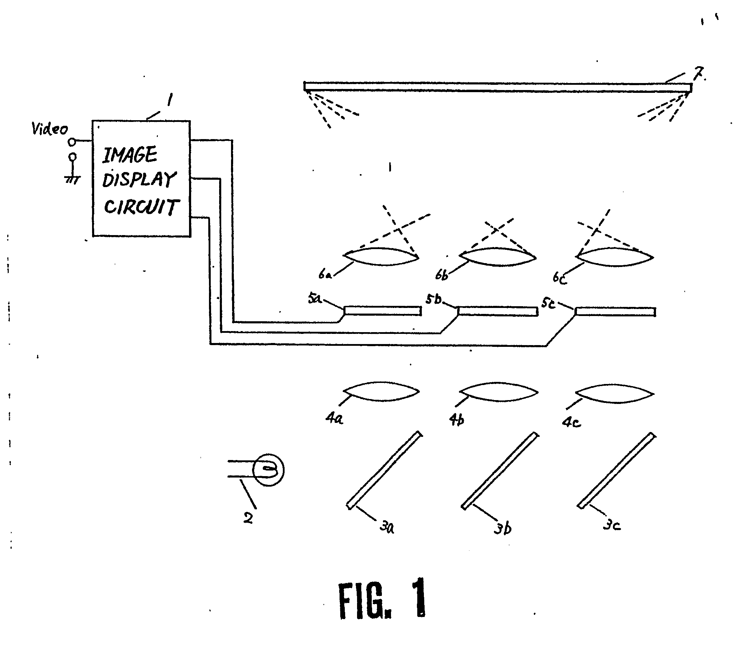

Fig.1 illustrates an arrangement of the projection-type image display apparatus provided with three liquid crystal panels according to the first embodiment of the present invention.

Shown in Fig.1 are an image display circuit 1, a lamp 2, a dichroic mirror 3a for reflecting R(red) light and passing the other lights of different wavelengths, a dichroic mirror 3b for reflecting G-(green) light and passing the other lights of different wavelengths, a dichroic mirror 3c for reflecting B(blue) light and passing the other lights of different wavelengths, optical condenser devices 4a, 4b, and 4c, a liquid crystal panel 5a for display of an R(red) color image, a liquid crystal panel 5b for display of a G(green) color image, a liquid crystal panel 5c for display of a B(blue) color image, projection lenses 6a, 6b, and 6c , and a projection screen 7.

An R light of the white light emitted from the lamp 2 is transmitted via the color separating dichroic mirror 3a and the optical condenser device 4a to the R image display liquid crystal panel 5a. Similarly, G and B lights are respectively transmitted via the dichroic mirrors 3b and 3c and the optical condenser devices 4b and 4c to the G and B image display liquid crystal panels 5b and 5c.

Also, three different images are produced on their respective image display liquid crystal panels 5a, 5b, and 5c corresponding to respective video signal voltages applied by the image display circuit 1.

The three color lights passing the image display liquid crystal panels 5a, 5b, and 5c are projected by their respective projection lenses 6a, 6b, and 6c onto the screen 7. Consequently, an optical image is seen on the screen 7.

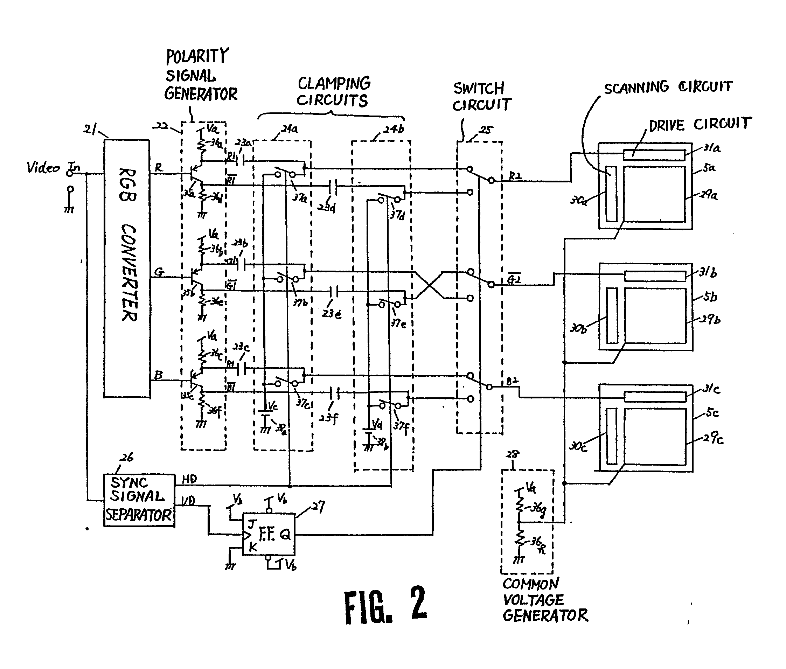

Fig.2 is a block diagram of the image display circuit 1 provided in the projection-type image display apparatus of the first embodiment, in which there are provided power source voltages Va and Vb, an RGB converter circuit 21, a polarity signal generator circuit 22 for producing positive and negative signals, capacitors 23a to 23f, clamping circuits 24a and 24b, switch circuit 25, a sync signal separator circuit 26 for producing horizontal and vertical sync signals, a flip-flop 27, a common voltage generator circuit 28, an R(red) image display 29a for producing a red color image of the R image display liquid crystal panel 5a, a G(green) image display 29b for producing a green color image of the G image display liquid crystal panel 5b, a B(blue) image display for producing a blue color image of the B image display liquid crystal panel 5c, scanning circuits 30a to 30c, and drive circuits 31a to 31c.

The polarity signal generator circuit 22 comprises transistors 35a to 35c and fixed resistors 36a to 36f (of resistance $R_1$), in which the emitters of the transistors 35a to 35c are coupled with the power source voltage Va via the fixed resistors 36a to 36c respectively while the collectors are connected to the ground via the fixed resistors 36d to 36f respectively. The clamping circuit 24a comprises switches 37a to 37c and a DC power source 38a for supply of a power source voltage Vc. Similarly, the clamping circuit 24b comprises switches 37d to 37f and a DC power source 38b for supply of a power source voltage Vd.

The common voltage generator circuit 28 comprises a fixed resistor 36g (of resistance $R_2$) coupled to the power source voltage Va and a fixed resistor 36h (of resistance $R_3$) connected to the ground.

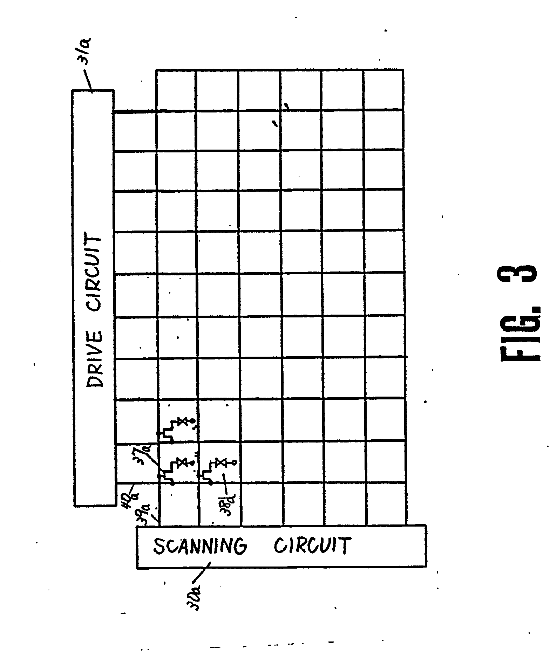

Fig.3 illustrates an arrangement of the R image display liquid crystal panel 5a according to the first embodiment of the present invention.

As shown in Fig.3, represented by 37a is a TFT (thin-film transistor), 38a is a liquid crystal display element, 39a is a gate bus, and 40a is a source bus. The scanning circuit 30a is coupled to the gate of each TFT 37a via the gate bus 39a while the drive circuit 31a is coupled to the source of the TFT 37a via the source bus 40a.

Both the G and B image display liquid crystal panel 5b and 5c are the same in construction as the liquid crystal panel 5a.

The image display circuit 1 in the projection-type image display apparatus of the first embodiment will now be described referring to Figs.2 and 3.

As shown in Fig.2, the input video signal is converted by the RGB converter circuit 21 into an R(red) video signal, a G(green) video signal, and a B(blue) video signal corresponding to the three primary colors. The three primary color signals are then transmitted to the polarity signal generator circuit 22 and thereafter, distributed as positive signals (expressed as R1, G1, and B1 respectively) and negative signals (expressed as $\overline{R1}$, $\overline{G1}$, and $\overline{B1}$ respectively) which are the same in the amplitude and different in the polarity.

R1, G1, and B1 are then fed into the clamping circuit 24a after their direct-current voltages are removed with the capacitors 23a to 23c respectively. Similarly, $\overline{R1}$, $\overline{G1}$, and $\overline{B1}$ are fed into the clamping circuit 24b after the DC voltages are removed with the capacitors 23d to 23f.

Also, a horizontal (HD) and a vertical (VD) sync signals are extracted from the input video signal. Then, with the use of HD sync signal, R1, G1, and B1 are pedestal clamped by the clamping circuit 24a to the output voltage Vc supplied from the DC power source 38a before being transmitted to the switch circuit 25. In the same manner, $\overline{R1}$, $\overline{G1}$, and $\overline{B1}$ are pedestal clamped by the clamping circuit 24b to the output voltage Vd from the DC power source 38b and then, sent to the switch circuit 25.

The VD signal from the sync signal separator circuit 26 is fed into the flip-flop 27 which has been adjusted to a toggle mode and in turn, delivers an output signal which inverts at field intervals as being synchronized with the VD signal, to the switch circuit 25.

The switch circuit 25 allows R1 and $\overline{R1}$, $\overline{G1}$ and G1, and B1 and $\overline{B1}$ to be alternately selected with fields by the signal supplied from the flip-flop 27 for output of respective signals (expressed as R2, $\overline{G2}$, and B2).

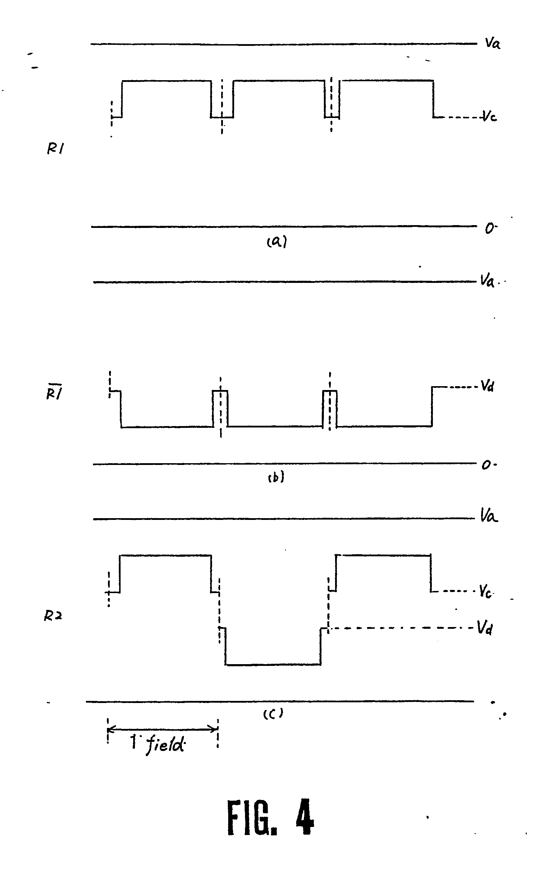

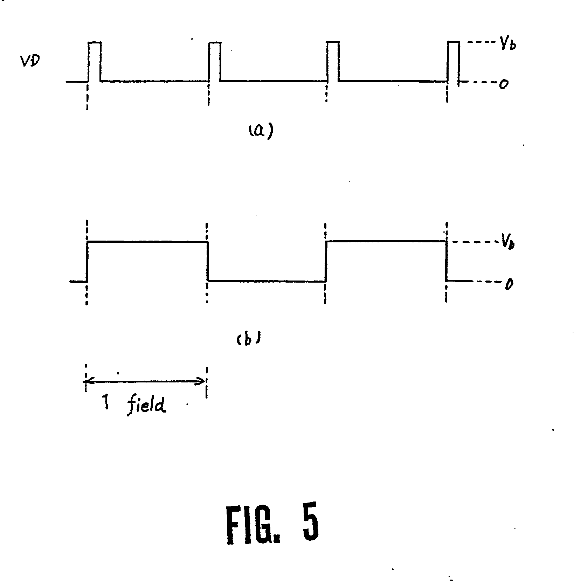

The timing is shown; R1 and $\overline{R1}$ supplied to the switch circuit 25 in Figs. 4a and 4b, R2 in Fig.4c, VD from the sync signal separator circuit 26 in Fig.5a, and the output signal from the flip-flop 27 in Fig.5b.

R2 from the switch circuit 25 is fed into the drive circuit 31a of the R image display liquid crystal panel 5a while $\overline{G2}$ and B2 are fed into the drive circuits 31b and 31c of the G and B image display liquid crystal panels 5b and 5c respectively.

On the other hand, the common voltage Ve is applied to between the transparent electrodes of the image display liquid crystal panels 5a, 5b, and 5c, which is developed by the common voltage generator circuit 28 and expressed as:

$$Ve = Va \times R_3 / (R_2 + R_3)$$

In such an operation, a video signal voltage applied to each pixel of the G image display liquid crystal panel is different by $\pi$ in the phase of polarity inversion with respect to the common voltage from video signal voltages applied to corresponding pixels of the R and B image display liquid crystal panels 5a and 5c. This allows flickers to be inverted in phase and thus, offset by each other in a projected image, whereby the effect of flickers on the projected image will remarkably be attenuated.

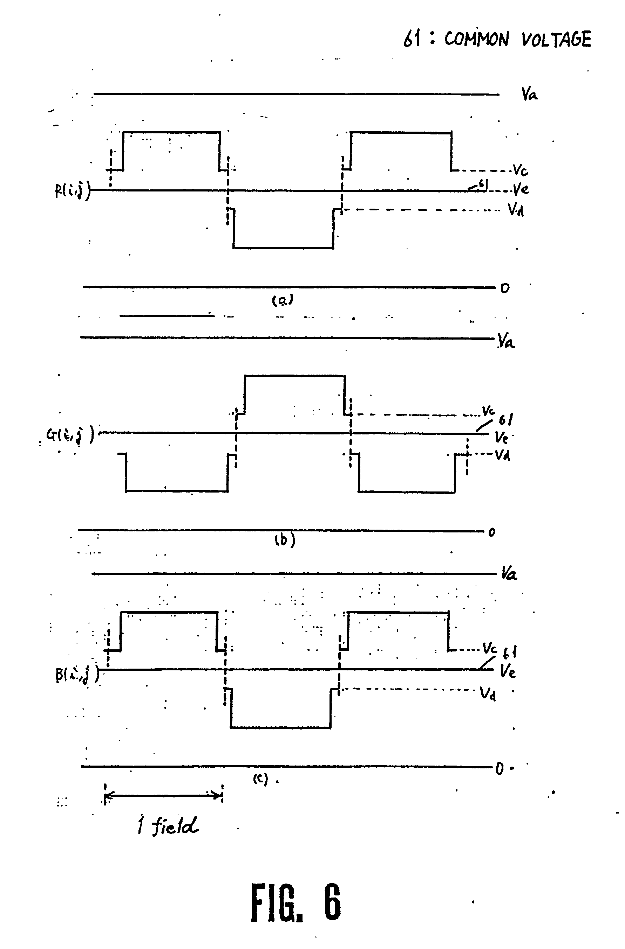

Also, the relation between a video signal voltage and the common voltage is shown associated with each field: Fig.6-a illustrates an R2 video signal voltage applied to a red color pixel situated in row i and column j on the R image display liquid crystal panel 5a (denoted by R(i,j)); Fig.6-b illustrates a G2 video signal voltage applied to a green color pixel G(i,j); and Fig.6-c illustrates a B2 video signal voltage applied to a blue color pixel B(i,j). As shown, the common voltage is represented by 61.

According to the foregoing embodiment, the application of voltage is carried out in which one of the three primary color video signal voltages is different by $\pi$ from the other two video signal voltages in the phase of polarity inversion with respect to a common voltage. However, the sensitivity of human eyes to brightness of R, G, and B colors is not equal as expressed by:

R:G:B = 0.30:0.59:0.11

Then, (R + B):G is obtained from:

(R + B):G = 0.41:0.59

This is most approximate to 1:1 among the other combinations of the primary three colors. Hence, the optimum procedure of reduction of flickers is determined in which the G video signal voltage is different by $\pi$ from the R and B video signal voltages in the phase of polarity conversion with respect to the common voltage.

A second embodiment of the present invention will then be described referring to the drawings.

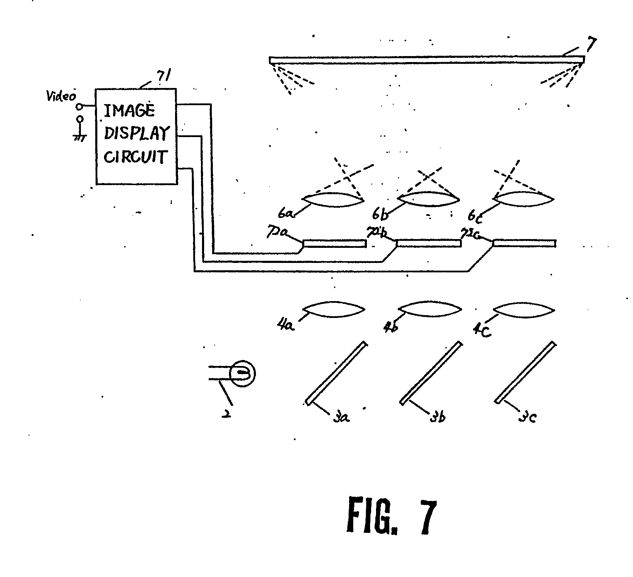

Fig.7 is a schematic view of a projection-type image display apparatus provided with three liquid crystal panels, showing the second embodiment of the present invention.

As shown, there are provided an image display circuit 71, an R image display liquid crystal panel 72a, a G image display liquid crystal panel 72b, and a B image display liquid crystal panel 72c. Other components in the arrangement and the principles of image projection are the same as shown in Fig.1.

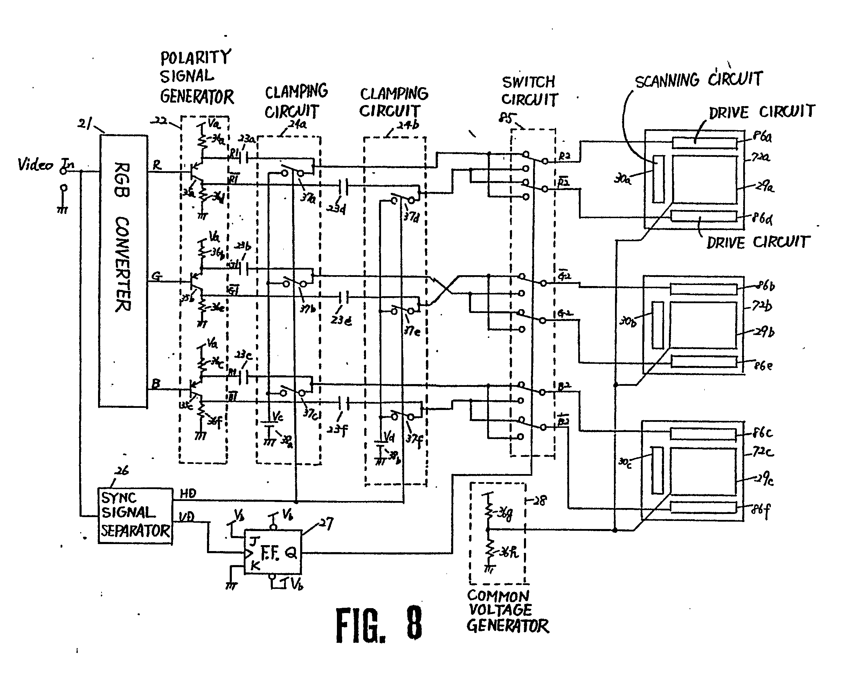

Fig.8 is a block diagram of the image display circuit 71 in the projection-type image display apparatus according to the second embodiment of the present invention, in which 85 is a switch circuit and 86a to 86f are drive circuits.

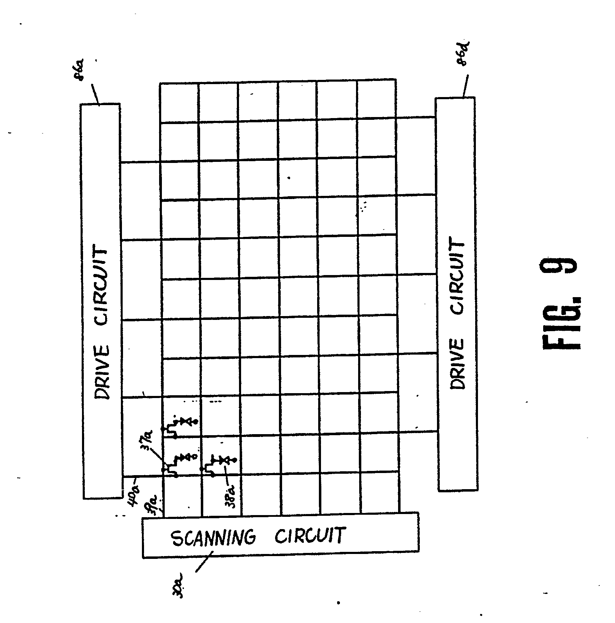

Fig.9 is a schematic view of the R image display liquid crystal panel 72a in the second embodiment.

As shown in Fig.9, two horizontally adjacent pixels are coupled via a source bus 40a to their respective drive circuits 86a and 86d. Both the G and B image display liquid crystal panels 72b and 72c are also the same in construction as the R image display liquid crystal panel 72a.

The image display circuit 71 in the second embodiment of the present invention will now be described referring to Figs.8 and 9.

As shown in Fig.8, the input video signal is fed into the switch circuit 85 as R1, G1, B1 and $\overline{R1}$, $\overline{G1}$, $\overline{B1}$ in the same manner as of the first embodiment.

In response to the output signal from the flip-flop 27, the switch circuit 85 outputs two different video signal voltages in each color by selecting R1 and $\overline{R1}$, G1 and $\overline{G1}$, or B1 and $\overline{B1}$ in alternate fields (which will be referred to as R2 and $\overline{R2}$, G2 and $\overline{G2}$, or B2 and $\overline{B2}$). The output signals from the switch circuit 85 are separately transferred; R2 to the drive circuit 86a of the R image display liquid crystal 72a while $\overline{R2}$ to the drive circuit 86d; $\overline{G2}$ to the drive circuit 86b of the G image display liquid crystal panel 72b while G2 to the drive circuit 86e; and B2 to the drive circuit 86c of the B image display liquid crystal panel 72c while $\overline{B2}$ to the drive circuit 86f.

In operation, two horizontally adjacent pixels of the image display liquid crystal panel in Fig.9 receive different signal voltages from the two drive circuits. Also, a common voltage from the common voltage generator circuit 28 is applied to the common electrode of each image display liquid crystal panel.

Accordingly, a given video signal voltage is applied to each target pixel of the G image display liquid crystal panel 72b, which is different by $\pi$ in the phase of polarity inversion with respect to the common voltage from the video signal voltages applied to corresponding pixels of the R and B image display crystal panels 72a and 72c. As the result, the phase of flicker can be inverted, causing the effects of flicker to be offset between the different color pixels appearing at the same location on a screen. Also, the phase of flicker becomes different between two horizontally adjacent pixels on each liquid crystal panel 72a, 72b, or 72c, allowing the flickers to be offset by each other and thus, considerably reduced in a projected image.

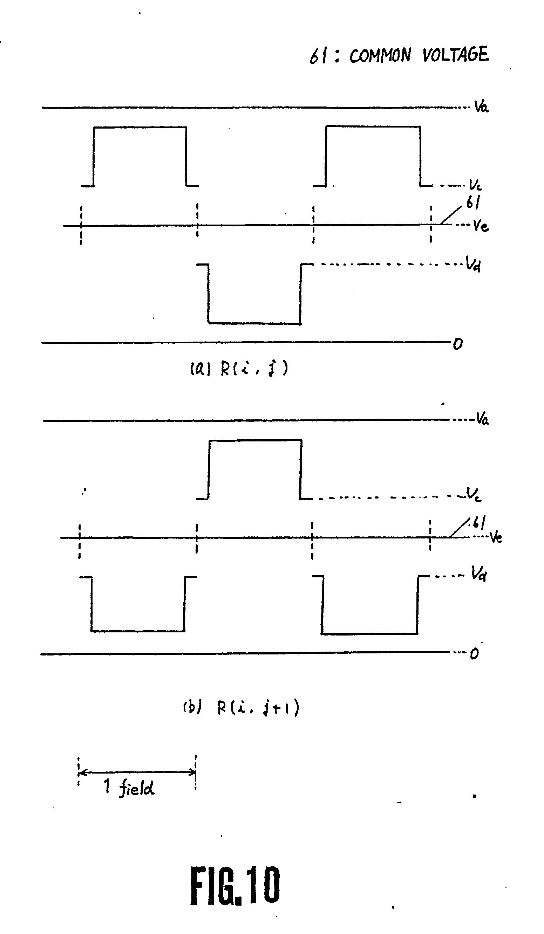

Fig.10 illustrates the relation between the common voltage and R(i,j) and R(i,j + 1) video signal voltages associated with a sequence of fields, according to the second embodiment.

According to the second embodiment set forth above, the application of voltage is carried out in which one of the three primary color video signal voltages is different by $\pi$ in the polarity of each field with respect to a common voltage from the other two video signal voltages. As well as the first embodiment, in consideration of difference in the sensitivity of human eyes to brightness of R, G, and B, it will be most preferred for reduction of flickers that the G video signal voltage is different by $\pi$ from the R and B video signal voltages in the polarity of each field with respect to the common voltage.

Although two video signal voltages which are different from each other by $\pi$ in the phase of polarity inversion with respect to a common voltage are respectively applied to two horizontally adjacent pixels of each of the three image display liquid crystal panels in each embodiment, video signal voltages which are alternately shifted in the phase of polarity inversion with respect to the common voltage may be used.

Also, such two video signal voltages which are different from each other by $\pi$ in the phase of polarity inversion with respect to a common voltage may be applied to two vertically adjacent pixels respectively rather than the two horizontally adjacent pixels or to two different groups of pixels.

In addition, when the different procedures of polarity inversion between horizontally adjacent pixels or pixel groups and between vertically adjacent pixels or pixel groups are employed in combination, more effect will be expected.

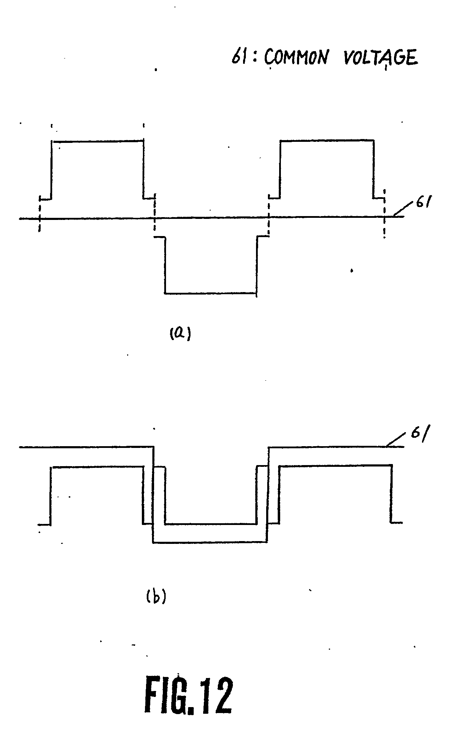

Although the common voltage in each of the embodiments is constant and remains unchanged, it may be inverted in synchronism with the polarity inversion of video signal voltages for control of the power source voltage in each drive circuit. Such a driving procedure with the inversion of a common voltage is shown in Fig.12b as compared with a normal driving procedure shown in Fig.12a.

The inversion of the video signal voltage with reference to the common voltage may be executed in each period when deterioration of liquid crystal panels is prevented by alternate-current drive, e.g. a frame other than a field.

Although the embodiments are described in the form of a front projection image display apparatus provided with a reflecting type screen, the present invention may be applicable to a rear projection image display apparatus with a transmitting type screen.

## Claims

1. A projection-type image display apparatus comprising a light emitter means, a plurality of image display means for modulating rays of light in response to a signal voltage, optical devices for projecting an image produced by the corresponding image display means onto a screen, and a drive circuit for driving the image display means; the drive circuit including a polarity signal generator means for delivering positive and negative signals of a video signal voltage with respect to a given voltage, a switch means for switching over the positive and negative signals, a controller means for controlling the switch means for switching at a predetermined intervals, and a voltage applying means for applying periodically polarity inverting signal voltages to the plural image display means, respectively, such that some of the signal voltages are different by a predetermined degree in the phase of polarity inversion from the others.

2. A projection-type image display apparatus according to Claim 1, wherein the number of the image display means is 3.

3. A projection-type image display apparatus according to Claim 1, wherein separate images produced by the image display means are projected so as to overlap at one location on the screen.

4. A projection-type image display apparatus according to Claim 1, wherein the image display means employ liquid crystal displays as display elements.

5. A projection-type image display apparatus according to Claim 4, wherein the image display means are active matrix image display means.

6. A projection-type image display apparatus according to Claim 5, wherein the active matrix image display means employ thin-film transistors as switching elements.

7. A projection-type image display apparatus according to Claim 1, wherein the image display means are a red-color, a green-color, and a blue-color image display means.

8. A projection-type image display apparatus according to Claim 1, wherein the voltage impressing means is adapted for applying to a target pixel of the green-color image display means a periodically polarity inverting signal voltage signal which is different by a predetermined degree in the phase of polarity inversion from the signal voltages applied to corresponding pixels of the red-color and blue-color image display means.

9. A projection-type image display apparatus according to Claim 1, wherein the voltage applying means is adapted for applying different signal voltage signals which are different from each other by a predetermined degree in the phase of polarity inversion, to either horizontally or vertically adjacent two pixels of each image display means.

10. A projection-type image display apparatus according to Claim 1, wherein the predetermined period of time corresponds to a field.

11. A projection-type image display apparatus according to Claim 1, wherein the predetermined period of time corresponds to a frame.

12. A projection-type image display apparatus according to Claim 1, wherein the given voltage is a voltage applied to between the confronting electrodes separated by a liquid crystal layer of the image display means.

13. A projection-type image display apparatus according to Claim 1, wherein the phase difference is $\pi$ .

FIG. 1

EP 0 400 993 A2

**FIG. 2**

FIG. 3

EP 0 400 993 A2

FIG. 4

VD

(a)

Vb

0

(b)

Vb

0

1 field

# FIG. 5

FIG. 6

FIG. 7

EP 0 400 993 A2

FIG. 8

FIG. 9

EP 0 400 993 A2

61 : COMMON VOLTAGE

(a) R(i, j)

(b) R(i, j+1)

1 field

# FIG.10

EP 0 400 993 A2

(a) "OFF" state

(b) "ON" state

# FIG.11

61: COMMON VOLTAGE

(a)

(b)

# FIG.12